# EUROPÄISCHE PATENTANMELDUNG

(11) **EP 2 807 911 A1**
(43) Veröffentlichungstag der Anmeldung: **03.12.2014**
(21) Anmeldenummer: 14401056.8
(22) Anmeldetag: 12.05.2014
(51) Int. Cl.: A01B 35/26, A01B 35/22

(54) **Zinken mit Schar und Leitplatte**

(30) Priorität: 30.05.2013 DE 102013105574
(71) Anmelder: Amazonen-Werke H. Dreyer GmbH & Co. KG, 49205 Hasbergen (DE)
(72) Erfinder: Reimer, Alexander, 04177 Leipzig (DE); Sosnicki, Jürgen, 04155 Leipzig (DE)

(57) **Zusammenfassung**

Zinken mit Schar und Leitplatte für Bodenbearbeitungsgeräte, insbesondere Grubberzinken, wobei das Schar lösbar mit einer Schraube an einem Halm angeordnet ist und sich daran die ebenfalls am Halm befestigte Leitplatte unmittelbar anschließt, wobei das Schar mit seiner am oberen Ende sich befindenden und quer zur Fortbewegungsrichtung verlaufenden Stoßkantenfläche unmittelbar an der sich am unteren Ende der Leitplatte sich befindenden und ebenfalls quer zur Fortbewegungsrichtung verlaufenden Stoßkantenfläche der Leitplatte in zumindest annähernd formschlüssiger Weise anliegt. Um ein fest am Halm befestigtes Schar in verbesserter Weise am Halm in einfacher Weise zu befestigen zu können, ist vorgesehen, dass die Stoßkantenfläche des Schares die Stoßkantenfläche der Leitplatte zwischen dem Halm und der Leitplatte hintergreift.

## Beschreibung

Die Erfindung betrifft einen Zinken mit Schar und Leitplatte gemäß des Oberbegriffes des Patentanspruches 1.

Eine derartiger Zinken mit Schar und Leitplatte ist in der DE 100 14 155 A1 beschrieben.

Dieser Zinken mit Schar und Leitplatte ist für Bodenbearbeitungsgeräte, insbesondere Grubberzinken vorgesehen. Das Schar ist lösbar mit einer Schraube an einem Halm angeordnet ist. An das Schar schließt sich die ebenfalls am Halm befestigte Leitplatte unmittelbar an. Das Schar liegt mit seiner am oberen Ende sich befindenden und quer zur Fortbewegungsrichtung verlaufenden Stoßkantenfläche unmittelbar an der sich am unteren Ende der Leitplatte sich befindenden und ebenfalls quer zur Fortbewegungsrichtung verlaufenden Stoßkantenfläche der Leitplatte in formschlüssiger Weise an.

Durch das formschlüssige aneinander Anliegen von Schar und Leitblech wird eine guter Anschluss der beiden Teile zueinander erreicht. Die Schraubverbindung, mit der das Schar am Halm befestigt ist, muss sehr stabil ausgelegt sein, damit diese die im Betrieb auftretenden Kräfte aufnehmen kann.

Durch die EP 2 031 953 B1 ist es bei einem Pflugschar bekannt, dass das Schar beweglich am Halter angeordnet ist und in beweglicher Weise das Leitblech in loser Weise hintergreift.

Der Erfindung liegt die Aufgabe zugrunde, ein fest am Halm befestigtes Schar in verbesserter Weise am Halm in einfacher Weise zu befestigen zu können.

Diese Aufgabe wird erfindungsgemäß dadurch gelöst, dass die Stoßkantenfläche des Schares die Stoßkantenfläche der Leitplatte zwischen dem Halm und der Leitplatte hintergreift.

Infolge dieser Maßnahme wird eine feste, unbewegliche Befestigung des Schares am Halm und gegenüber dem Leitblech sichergestellt. Hierbei sind die aneinander anliegenden Stoßkanten zwischen Schar und Leitblech so ausgestaltet, dass das mit einem Befestigungselement am Halm befestigte Leitblech das Schar am Halm im aneinander anliegenden Bereich festklemmt und gegen den Halm drückt. Während des Arbeitsvorganges stützt sich das Schar gegen das Leitblech ab. Weiterhin wird ein verdrehen von Schar zu dem leitblech verhindert.

Um ein vorteilhaftes hintergreifen der Stoßkante des Schares hinter die Stoßkante des Leitbleches sowie ein sicheres verklemmen von Schar und Leitblech zu einander zu erreichen, ist vorgesehen, dass die Stoßkantenflächen unter einem Winkel zwischen 30° und 60°, vorzugsweise etwa 45° zum aufrechten Verlauf der Rückseiten von Schar und Leitplatte, mit welcher diese am Halm im Bereich ihrer Stoßkantenflächen anliegen, verlaufen.

Ein sicheres Anliegen der Stoßkanten von Schar und Leitblech aneinander lässt sich dadurch erreichen, dass die quer zur Fortbewegungsrichtung verlaufenden Stoßkantenflächen von Schar und Leitplatte sich zumindest annähernd über die halbe Breite von Schar und Leitplatte erstrecken und sich im mittleren Bereich des Schares befindet und über diese Breite aneinander anliegend ausgebildet sind.

Weitere Einzelheiten der Erfindung sind der Beispielsbeschreibung zu entnehmen. Die Zeichnungen zeigen
- Fig.1: einen Zinken in perspektivischer Darstellung,
- Fig.2: einen Zinken in perspektivischer Darstellung und in Explosionsdarstellung,
- Fig. 3: den Zinken in der Ansicht von vorn,
- Fig. 4: den Zinken im Schnitt IV - IV,
- Fig.5: einen weiteren Zinken in perspektivischer Darstellung,
- Fig.6: den Zinken nach Fig. 5 in perspektivischer Darstellung und in Explosionsdarstellung,
- Fig. 7: den Zinken nach Fig. 5 in der Ansicht von vorn und
- Fig. 8: den Zinken im Schnitt VIII - VIII.

Der Zinken 1 ist im Ausführungsbeispiel als Grubberzinken ausgebildet und an einem als Halm 2 ausgebildeten Stiel befestigt. An einem Rahmen eines Grubbers sind beabstandet zueinander mehrere Zinken 1 tragende Halme 2 angeordnet. Der jeweilige Zinken 1 weist ein Schar 3 und eine sich unmittelbar anschließende Leitplatte 4 auf. Das Schar 3 und die Leitplatte 4 sind jeweils lösbar mit einer Schraube 5 an dem Halm 2 befestigt. Das Schar 3 weist an seinem oberen Ende 6 eine sich quer zur Fortbewegungsrichtung 7 verlaufende Stoßkantenfläche 8 auf. An dem unteren Ende 9 der Leitplatte 4 befindet sich ebenfalls eine quer zur Fortbewegungsrichtung 7 verlaufende Stoßkantenfläche 10. Die Stoßkantenflächen 8 und 10 liegen in am Halm 2 montierter Position in zumindest annähernd formschlüssiger Weise aneinander an.

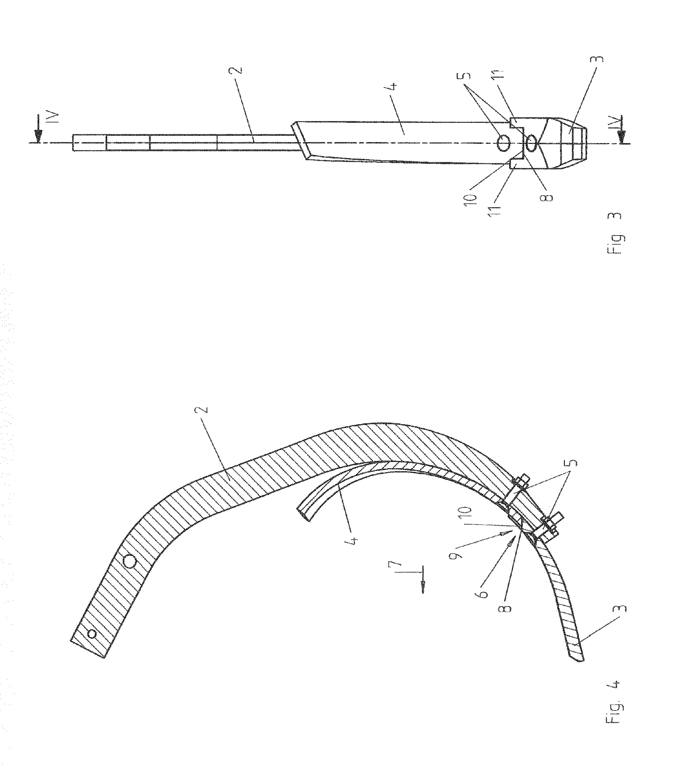

Die Stoßkantenfläche 8 des Schares 1 und die Stoßkantenfläche 10 der Leitplatte 4 hintergreift zwischen dem Halm 2 und der Leitplatte 4 die Leitplatte 4, wie Fig. 3 zeigt.

Die Stoßkantenflächen 8 und 10 verlaufen unter einem Winkel zwischen 30° und 60 °, vorzugsweise etwa 45° zum aufrechten Verlauf der Rückseiten von Schar 3 und Leitplatte 4, mit welcher diese am Halm 2 im Bereich ihrer Stoßkantenflächen 8 und 10 aneinander anliegen. Hierbei sind die quer zur Fortbewegungsrichtung 7 verlaufenden Stoßkantenflächen 8 und 10 von Schar 3 und Leitplatte 4 sich zumindest annähernd über halbe Breite von Schar 3 und Leitplatte 4 erstrecken und sich im mittleren Bereich des Schares 3 befindet und über diese Breite aneinander anliegend ausgebildet.

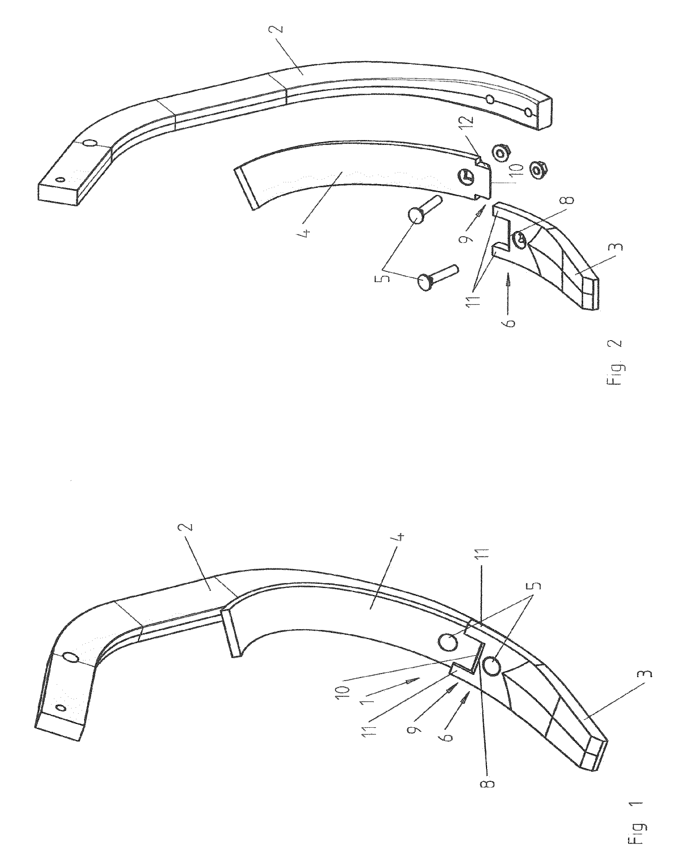

Jeweils im äußeren oberen seitlichen Bereich weist das Schar 3 nach oben in Richtung der Leitplatte 4 ragende fingerartig ausgebildete Führungsstücke 11 auf, welche die unteren seitlichen Bereiche 12 der Leitplatte 4 übergreifen und/oder in diese eingreifen, wie die Fig. 1 bis 3 zeigen. Die fingerartig ausgebildeten Führungsstücke 11 verlaufen parallel zueinander.

Durch die vorbeschriebene Ausgestaltung ergibt sich eine einfache und verdrehsichere Befestigung des Schares 3 und der Leitplatte 4 des Zinkens 1 am Halm 2.

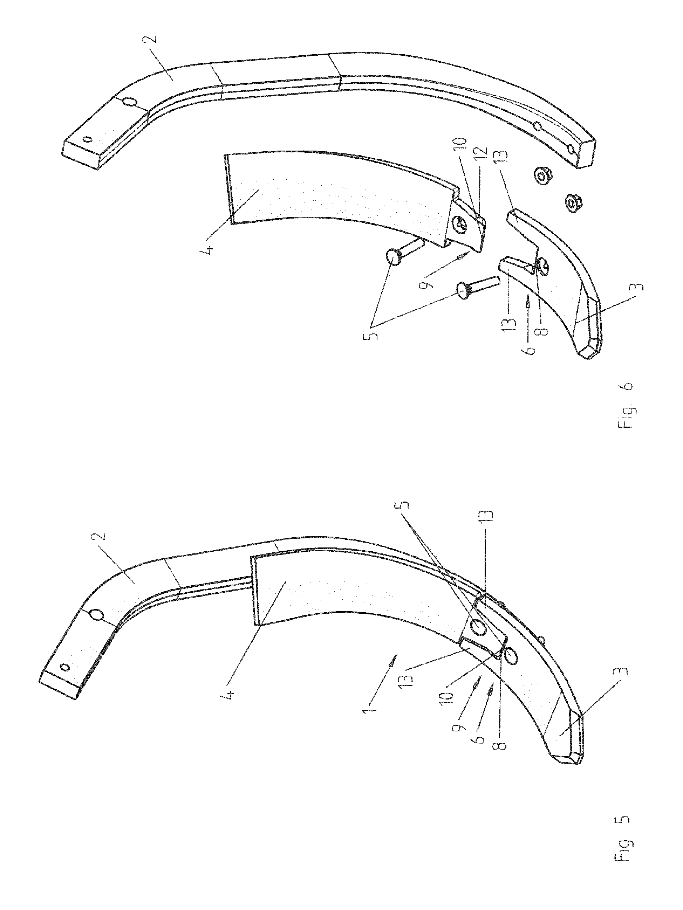

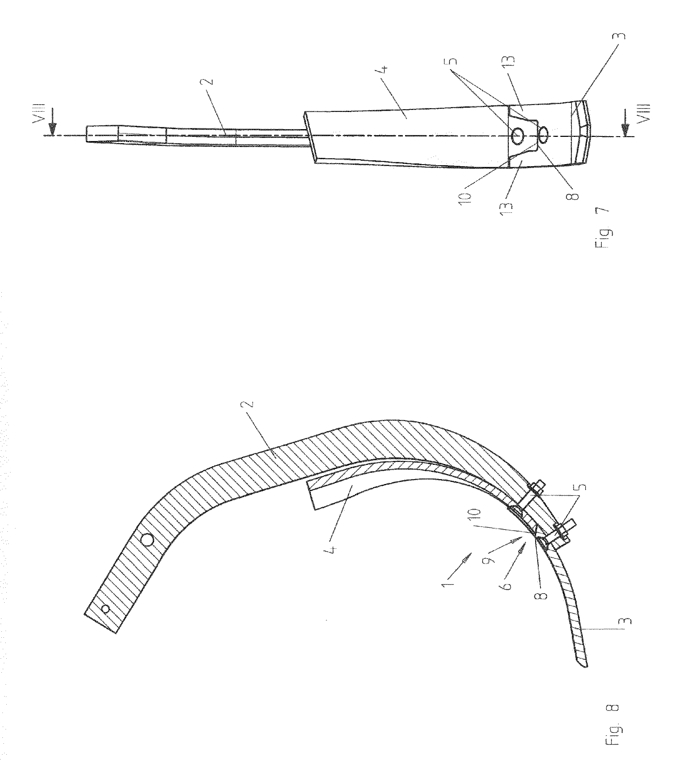

Der Zinken 12 gemäß den Fig. 5 bis 8 unterscheidet sich von dem Zinken 1 gemäß den Fig. 1 bis 4 dadurch, dass die fingerartig ausgebildete Führungsstücke 13 nicht parallel zueinander, sondern nach oben auseinander verlaufend angeordnet sind.

## Patentansprüche

1. Zinken (1) mit Schar (3) und Leitplatte (4) für Bodenbearbeitungsgeräte, insbesondere Grubberzinken, wobei das Schar (3) lösbar mit einer Schraube (5) an einem Halm (2) angeordnet ist und sich daran die ebenfalls am Halm (2) befestigte Leitplatte (4) unmittelbar anschließt, wobei das Schar (3) mit seiner am oberen Ende (6) sich befindenden und quer zur Fortbewegungsrichtung (7) verlaufenden Stoßkantenfläche (8) unmittelbar an der sich am unteren Ende (9) der Leitplatte (4) sich befindenden und ebenfalls quer zur Fortbewegungsrichtung (7) verlaufenden Stoßkantenfläche (10) der Leitplatte (4) in zumindest annähernd formschlüssiger Weise anliegt, **dadurch gekennzeichnet, dass** die Stoßkantenfläche (8) des Schares (4) die Stoßkantenfläche (10) der Leitplatte (4) zwischen dem Halm (2) und der Leitplatte (4) hintergreift.

2. Zinken nach Anspruch 1, **dadurch gekennzeichnet, dass** die Stoßkantenflächen (8, 10) unter einem Winkel zwischen 30° und 60°, vorzugsweise etwa 45° zum aufrechten Verlauf der Rückseiten von Schar (3) und Leitplatte (4), mit welcher diese am Halm (2) im Bereich ihrer Stoßkantenflächen (8, 10) anliegen, verlaufen.

3. Zinken nach zumindest einem der vorstehenden Ansprüche, **dadurch gekennzeichnet, dass** die quer zur Fortbewegungsrichtung (7) verlaufenden Stoßkantenflächen (8, 10) von Schar (3) und Leitplatte (4) sich zumindest annähernd über die halbe Breite von Schar (3) und Leitplatte (4) erstrecken und sich im mittleren Bereich des Schares befindet und über diese Breite aneinander anliegend ausgebildet sind.
